(19) Europäisches Patentamt
European Patent Office
Office européen des brevets

(11) EP 3 323 914 B1

(12) # EUROPEAN PATENT SPECIFICATION

(45) Date of publication and mention of the grant of the patent:
**01.01.2020 Bulletin 2020/01**

(21) Application number: **16824369.9**

(22) Date of filing: **07.07.2016**

(51) Int Cl.:
***D01F 6/90*** $^{(2006.01)}$ ***C08G 69/26*** $^{(2006.01)}$
***C08K 5/134*** $^{(2006.01)}$ ***C08L 77/06*** $^{(2006.01)}$
***D03D 15/00*** $^{(2006.01)}$ ***D04B 1/16*** $^{(2006.01)}$

(86) International application number:
**PCT/JP2016/070080**

(87) International publication number:
**WO 2017/010389 (19.01.2017 Gazette 2017/03)**

(54) **POLYAMIDE RESIN FIBER, PRODUCTION METHOD FOR POLYAMIDE RESIN FIBER, POLYAMIDE RESIN COMPOSITION, WOVEN FABRIC, AND KNITTED FABRIC**

POLYAMIDHARZFASER, HERSTELLUNGSVERFAHREN FÜR POLYAMIDHARZFASER, POLYAMIDHARZZUSAMMENSETZUNG, GEWEBE UND WEBSTOFF

FIBRE DE RÉSINE DE POLYAMIDE, PROCÉDÉ DE PRODUCTION D’UNE FIBRE DE RÉSINE DE POLYAMIDE, COMPOSITION DE RÉSINE DE POLYAMIDE, TISSU TISSÉ, ET TISSU TRICOTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2015 JP 2015141871**

(43) Date of publication of application:
**23.05.2018 Bulletin 2018/21**

(73) Proprietor: **Mitsubishi Gas Chemical Company, Inc.**
**Tokyo 100-8324 (JP)**

(72) Inventors:
- **OTSUKA Kosuke**
  **Hiratsuka-shi**
  **Kanagawa 254-0016 (JP)**
- **KATO Tomonori**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**WO-A1-2014/132776**
**JP-A- H01 185 362**
**JP-A- 2000 192 331**
**JP-B2- 5 694 610**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 323 914 B1

## Description

### TECHNICAL FIELD

This invention relates to a polyamide resin fiber, a method for manufacturing the polyamide resin fiber, a polyamide resin composition, a woven fabric, and a knitted fabric.

### BACKGROUND ART

Polyamide resin having excellent heat resistance and mechanical strength, has been applied in various ways.

For example, Patent Literature 1 discloses a thermoplastic resin composition that contains 0.01 to 30 parts by weight of (C) compatibilizer, 0.1 parts by weight to 100 parts by weight of (D) plasticizer that makes polyamide flexible, and 0 to 100 parts by weight of (E) rubber-like material; per 100 parts by weight in total of 5 to 90 parts by weight of (A) polyphenylene ether-based resin and 95 to 10 parts by weight of (B) polyamide resin. Patent Literature 1 also describes that such thermoplastic resin composition enjoys flexibility and high tensile strength at the same time. Patent Literature 1 also describes that such thermoplastic resin composition is used for pipes and tubes.

Meanwhile, Patent Literature 2 discloses a hollow structure that includes a layer made of a resin containing one or more semi-aromatic polyamides and one or more functionalized polyolefins. It is also described that such hollow structure is well balanced among properties including flexibility, impermeability to the refrigerant fluid, and a good retention of properties upon exposure to heat or refrigerant fluid.

Patent Literature 3 describes a polyamide resin composition that contains 2 to 60 parts by weight of (A) compound represented by Formula (1):

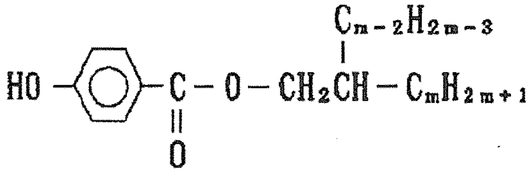

··· (1)

(in the formula, m represents an integer of 7 or larger, and 10 or smaller.); and

0.05 to 5 parts by weight of (B) branched monohydric alcohol having 16 to 24 carbon atoms, per 100 parts by weight of a polyamide resin selected from polyamide 11, polyamide 12 and mixtures of these compounds. As applications of such polyamide resin composition, exemplified are industrial robot; construction machinery; fuel hose, hydraulic and pneumatic tubes for automobile; and injection-molded articles for automobile interior.

### CITATION LIST

### PATENT LITERATURES

[Patent Literature 1] JP-A-H07-157651
[Patent Literature 2] International Patent WO2011/084421, pamphlet
[Patent Literature 3] JP-A-H07-11131

### SUMMARY OF THE INVENTION

### TECHNICAL PROBLEM

As described above, the polyamide resin has been processed into various shapes. More recently, polyamide resin fibers obtained from polyamide resins or polyamide resin compositions after fiber making process have been used. Among these polyamide resin fibers, xylylenediamine-based polyamide resin fiber is beneficial owing to its low water absorption and high chemical resistance. However, since being a fiber, the polyamide resin fiber is required to be especially durable, as compared with polyamide resin molded articles of other shapes.

This invention is aimed at solving the problem, and is to provide a polyamide resin fiber with excellent durability. Again this invention is to provide a method for manufacturing a polyamide resin fiber, a polyamide resin composition, a woven fabric, and a knitted fabric.

SOLUTION TO PROBLEM

Under such situation, the present inventors found after extensive investigations that the above problem can be solved by the following means. Specifically, the above-described problem was solved by the following means.

<1> A polyamide resin fiber comprising 0.5 to 15 parts by weight of a compound represented by Formula (1), per 100 parts by weight of a polyamide resin, the polyamide resin being composed of a diamine-derived structural unit and a dicarboxylic acid-derived structural unit, 50 mol% or more of the diamine-derived structural unit being derived from xylylenediamine, and 50 mol% or more of the dicarboxylic acid-derived structural unit being derived from a straight chain aliphatic α, ω-dicarboxylic acid having 4 to 20 carbon atoms:

Formula (1)

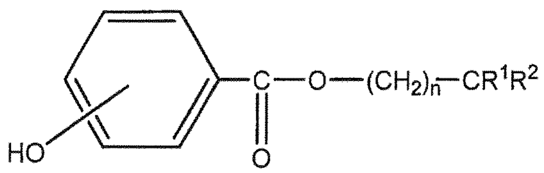

wherein $R^1$ represents an alkyl group having 1 to 10 carbon atoms, $R^2$ represents an alkyl group having 2 to 12 carbon atoms, and n represents an integer of 1 to 3.

<2> The polyamide resin fiber of <1>, wherein the polyamide resin fiber has a fineness of 50 to 800 dtex.

<3> The polyamide resin fiber of <2>, wherein the polyamide resin fiber satisfies the following property;
when the polyamide resin fiber is fixed and brought into contact with aluminum oxide-derived abrasive ceramic plates by rotating a friction disk at a rotational speed of 120 rpm so as to apply an average load of 150 g to the fiber, the polyamide resin fiber breaks when the number of rotation reached 100 or larger.

<4> The polyamide resin fiber of any one of <1> to <3>, wherein the xylylenediamine comprises 30 to 100 mol% of metaxylylenediamine and 0 to 70 mol% of paraxylylenediamine.

<5> The polyamide resin fiber of any one of <1> to <4>, wherein 50 mol% or more of the dicarboxylic acid-derived structural unit is derived from at least one of sebacic acid and adipic acid.

<6> The polyamide resin fiber of any one of <1> to <4>, wherein 50 mol% or more of the dicarboxylic acid-derived structural unit is derived from adipic acid.

<7> The polyamide resin fiber of any one of <1> to <6>, wherein the polyamide resin fiber has a phosphorus atom concentration of 0.1 to 10 ppm.

<8> The polyamide resin fiber of any one of <1> to <7>, having a tensile strength, measured according to JIS L1013, of 2.0 cN/dtex or larger.

<9> The polyamide resin fiber of any one of <1> to <8>, being drawn.

<10> A method for manufacturing a polyamide resin fiber, the method comprising drawing a fiber composed of a polyamide resin composition, the polyamide resin composition comprising 0.5 to 15 parts by weight of a compound represented by Formula (1), per 100 parts by weight of a polyamide resin, the polyamide resin being composed of a diamine-derived structural unit and a dicarboxylic acid-derived structural unit, 50 mol% or more of the diamine-derived structural unit being derived from xylylenediamine, and 50 mol% or more of the dicarboxylic acid-derived structural unit being derived from a straight chain aliphatic α,ω-dicarboxylic acid having 4 to 20 carbon atoms:

Formula (1)

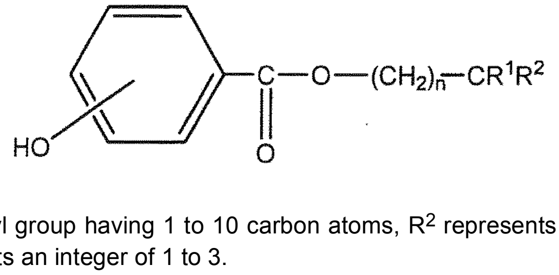

wherein $R^1$ represents an alkyl group having 1 to 10 carbon atoms, $R^2$ represents an alkyl group having 2 to 12 carbon atoms, and n represents an integer of 1 to 3.

<11> The method for manufacturing a polyamide resin of <10>, wherein the drawing is performed in two or more

stages.

<12> The method for manufacturing a polyamide resin of <10> or <11>, performed at a total draw ratio of 4.1 or larger.

<13> The method for manufacturing a polyamide resin of any one of <10> to <12>, wherein the fiber before being drawn has a fineness of 100 to 5000 dtex.

<14> A polyamide resin composition comprising 0.5 to 15 parts by weight of a compound represented by Formula (1), per 100 parts by weight of a polyamide resin, the polyamide resin being composed of a diamine-derived structural unit and a dicarboxylic acid-derived structural unit, 50 mol% or more of the diamine-derived structural unit being derived from xylylenediamine, and 50 mol% or more of the dicarboxylic acid-derived structural unit being derived from a straight chain aliphatic α,ω-dicarboxylic acid having 4 to 20 carbon atoms:

Formula (1)

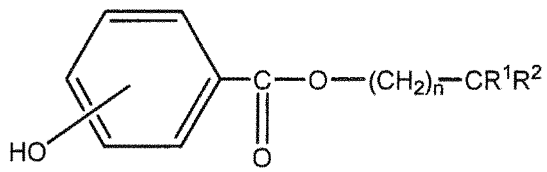

wherein $R^1$ represents an alkyl group having 1 to 10 carbon atoms, $R^2$ represents an alkyl group having 2 to 12 carbon atoms, and n represents an integer of 1 to 3.

<15> The polyamide resin composition of <14>, having a phosphorus atom concentration of 0.1 to 10 ppm.

<16> The polyamide resin composition of <14> or <15>, used for manufacturing a drawn polyamide resin fiber.

<17> A woven fabric using the fiber described in any one of <1> to <9>.

<18> A knitted fabric using the fiber described in any one of <1> to <9>.

## ADVANTAGEOUS EFFECTS OF INVENTION

With this invention, it now became possible to provide a highly durable polyamide resin fiber, a method for manufacturing such polyamide resin fiber, a polyamide resin composition, a woven fabric and a knitted fabric.

## BRIEF DESCRIPTION OF DRAWINGS

[FIG. 1] A schematic drawing illustrating a process for manufacturing the polyamide resin fiber of this invention.

## DESCRIPTION OF EMBODIMENTS

This invention will be detailed below. Note that all numerical ranges in this specification given using "to", placed between numerals, mean the ranges containing both numerals as the lower and upper limits. Note also that "ppm" in this specification means "ppm by weight".

The polyamide resin fiber of this invention is characterized in that the polyamide resin contains 0.5 to 15 parts by weight of a compound represented by Formula (1) per 100 parts by weight of a polyamide resin; the polyamide resin being composed of a diamine-derived structural unit and a dicarboxylic acid-derived structural unit; 50 mol% or more of the diamine-derived structural unit being derived from xylylenediamine, and 50 mol% or more of the dicarboxylic acid-derived structural unit being derived from a straight chain aliphatic α, ω-dicarboxylic acid having 4 to 20 carbon atoms:

Formula (1)

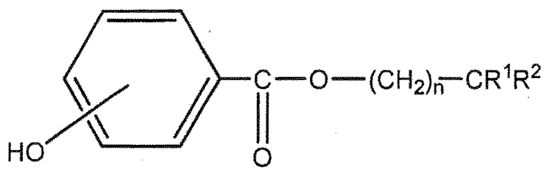

in Formula (1), $R^1$ represents an alkyl group having 1 to 10 carbon atoms, $R^2$ represents an alkyl group having 2 to 12 carbon atoms, and n represents an integer from 1 to 3.

With such configuration, a highly durable polyamide resin fiber may be obtained.

Addition of a plasticizer, such as the compound represented by Formula (1), to the polyamide resin has previously been described, for example, in Patent Literature 1, Patent Literature 2 and Patent Literature 3. However, further investigations by the present inventors revealed that a distinctively high durability can be achieved by adding a predetermined ratio of the compound represented by Formula (1), to a polyamide resin that is composed of a diamine-derived structural unit and a dicarboxylic acid-derived structural unit: 50 mol% or more of the diamine-derived structural unit being derived from xylylenediamine, and 50 mol% or more of the dicarboxylic acid-derived structural unit being derived from a straight chain aliphatic $\alpha$, $\omega$-dicarboxylic acid having 4 to 20 carbon atoms (the polyamide resin will occasionally be referred to as "XD-based polyamide resin, hereinafter").

In general, addition of a plasticizer tends to lower the crystallization temperature of polyamide resin in the heating process. Lowered crystallization temperature typically makes the polyamide resin more crystallizable, and this typically makes drawing difficult. The crystallization temperature was found to be lowered also when the compound represented by Formula (1) was added to the XD-based polyamide resin. A fiber composed of the polyamide resin composition, based on the combination of the XD-based polyamide resin and the compound represented by Formula (1) was, however, found to be easily drawable despite the lowered crystallization temperature in the heating process. The present inventors further found that the fiber composed of the polyamide resin composition was drawable to a larger draw ratio, even if compared with the fiber that does not contain the compound represented by Formula (1). The polyamide resin fiber of this invention also succeeded in achieving excellent mechanical strengths (tensile strength and shear strength) when drawn to a larger draw ratio. This is surprising particularly because no other plasticizer can attain this result, as described later. Since the polyamide resin fiber of this invention contains the compound represented by Formula (1), which is a kind of plasticizer, it will have an excellent wear resistance, owing to a synergistic effect of a large draw ratio and plasticization effect given by the plasticizer. This invention thus succeeded in providing a polyamide resin fiber capable of achieving a high durability.

This invention will be detailed below.

The polyamide resin fibers of this invention is formed from a polyamide resin composition containing 0.5 to 15 parts by weight of the compound represented by Formula (1) per 100 parts by weight of the XD-based polyamide resin. More preferably,the polyamide resin fiber of the present invention is obtaind by streching fibers that is made of the polyamide resin composition. The polyamide resin composition of this invention will be detailed below.

<XD-Based Polyamide Resin>

The XD-based polyamide resin used as an essential component in this invention is composed of a structural unit derived from diamine and a structural unit derived from dicarboxylic acid, wherein 50% by mole or more of the structural unit derived from diamine is derived from xylylenediamine, and 50% by mole or more of the structural unit derived from dicarboxylic acid is derived from a straight-chain aliphatic $\alpha,\omega$-dicarboxylic acid having 4 to 20 carbon atoms.

In the XD-based polyamide resin, preferably 70% by mole or more, more preferably 80% by mole or more, and even more preferably 90% by mole or more of the structural unit derived from diamine is derived from at least one species of xylylenediamine; and preferably 70% by mole or more, more preferably 80% by mole or more, and particularly 90% by mole or more of the structural unit derived from dicarboxylic acid is derived from at least one species of straight-chain aliphatic $\alpha,\omega$-dicarboxylic acid preferably having 4 to 20 carbon atoms.

The diamine component, which is an ingredient for the XD-based polyamide resin contains 70% by mole or more of metaxylylenediamine, wherein the content is more preferably 80% by mole or more, and even more preferably 90% by mole or more. The diamine component with the metaxylylenediamine content adjusted to 70% by mole or more, the obtainable polyamide resin will have an excellent gas barrier performance.

More specifically, the xylylenediamine is preferably composed of 30 to 100% by mole of metaxylylenediamine and 0 to 70% by mole of paraxylylenediamine, and more preferably composed of 70 to 100% by mole of metaxylylenediamine and 0 to 30% by mole of paraxylylenediamine.

Examples of diamines other than xylylenediamine, which may be used as a source diamine component for the XD-based polyamide resin, include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis (aminomethyl) tricyclodecane; and diamines having aromatic rings such as bis(4-aminophenyl)ether, paraphenylenediamine, and bis(aminomethyl)naphthalene, which may be used independently, or as a mixture of two or more species.

When the diamine other than xylylenediamine is used as the diamine component, the ratio of use is 30% by mole or less of the structural unit derived from diamine, preferably 1 to 25% by mole, and particularly 5 to 20% by mole.

The straight-chain aliphatic α,ω-dicarboxylic acid having 4 to 20 carbon atoms, preferably used as the source dicarboxylic acid component for the XD-based polyamide resin is preferably straight-chain aliphatic α,ω-dicarboxylic acid having 6 to 16 carbon atoms, and more preferably straight-chain aliphatic α,ω-dicarboxylic acid having 6 to 10 carbon atoms. The straight-chain aliphatic α,ω-dicarboxylic acid having 4 to 20 carbon atoms is exemplified by aliphatic dicarboxylic acids such as succinic acid, glutaric acid, pimelic acid, suberic acid, azelaic acid, adipic acid, sebacic acid, undecanedioic acid, and dodecanedioic acid, which may be used independently, or as a mixture of two or more species. Among them, at least one of adipic acid and sebacic acid is preferable, in view of controlling the melting point of the polyamide resin suitable for molding or working. Adipic acid is particularly preferable.

The dicarboxylic acid component other than the straight-chain aliphatic α,ω-dicarboxylic acid having 4 to 20 carbon atoms is exemplified by phthalic acid compounds such as isophthalic acid, terephthalic acid, and orthophthalic acid; and naphthalenedicarboxylic acids including isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid, which may be used independently, or as a mixture of two or more species.

When the dicarboxylic acid other than the straight-chain aliphatic α,ω-dicarboxylic acid having 4 to 20 carbon atoms is used as the dicarboxylic acid component, it is preferable to use terephthalic acid or isophthalic acid, taking the moldability or workability, and barrier performance into consideration. Ratio of terephthalic acid or isophthalic acid is preferably 30% by mole or less of the structural unit derived from dicarboxylic acid, more preferably in the range from 1 to 30% by mole, and particularly from 5 to 20% by mole.

Now, the phrase stating that "composed of the structural unit derived from diamine and the structural unit derived from dicarboxylic acid" means that the amido bond composing the XD-based polyamide resin is formed by a bond between dicarboxylic acid and diamine. The XD-based polyamide resin contains other moieties such as terminal groups, besides the structural unit derived from dicarboxylic acid and the structural unit derived from diamine. It could even contain a repeating unit whose amido bond is not attributable to the bond between dicarboxylic acid and diamine, and a trace amount of impurity. More specifically, the XD-based polyamide resin may employ lactams such as ε-caprolactam and laurolactam, or aliphatic aminocarboxylic acids such as aminocaproic acid and aminoundecanoic acid, as the copolymerizable components constituting the polyamide resin, besides the diamine component and the dicarboxylic acid component, without adversely affecting the effects of this invention. In this invention, the structural unit derived from diamine or structural unit derived from dicarboxylic acid preferably accounts for 90% by weight or more of the XD-based polyamide resin.

The XD-based polyamide resin used in this invention preferably has a phosphorus atom concentration of 0.1 to 10 ppm, and more preferably 1 to 8 ppm. Within these ranges, not only the fiber is prevented from yellowing, but also concurrently the continuous productivity is improved as a result of suppressed clogging of a polymer filter, and thereby the effects of this invention will be demonstrated more efficiently.

As detailed later, the polyamide resin fiber used in this invention preferably has the phosphorus atom concentration within a predetermined range, and such phosphorus atom is, in most cases, attributable to the polyamide resin.

The XD-based polyamide resin used in this invention preferably has a number-average molecular weight (Mn) of 6,000 to 30,000, more preferably 8,000 to 28,000, and even more preferably 9,000 to 26,000. Within these ranges, the moldability or workability will further be improved.

The number-average molecular weight (Mn) in this context is calculated from the equation below, using terminal amino group concentration $[NH_2]$ (microequivalent/g) and terminal carboxy group concentration [COOH] (microequivalent/g) of the polyamide resin:

$$\text{Number-average molecular weight (Mn)} = 2{,}000{,}000/([COOH] + [NH_2])$$

The XD-based polyamide resin used in this invention preferably has a polydispersity (weight-average molecular weight/number-average molecular weight (Mw/Mn)) of 1.8 to 3.1. The polydispersity is more preferably 1.9 to 3.0, and even more preferably 2.0 to 2.9. With the polydispersity controlled within these ranges, a composite material with excellent mechanical properties will more likely be obtained.

The polydispersity of the XD-based polyamide resin is controllable by properly selecting, for example, types and amounts of initiator and catalyst used for polymerization, and polymerization conditions such as reaction temperature, pressure and time. It is alternatively controllable by mixing two or more types of XD-based polyamide resins with different average molecular weights obtained under different polymerization conditions, or by subjecting the polymerized XD-based polyamide resin to fractional precipitation.

The polydispersity may be determined by GPC measurement, and may more specifically be given as standard

polymethyl methacrylate (PMMA) equivalent values, through measurement by using "HLC-8320GPC" from TOSOH Corporation as an instrument, two sets of "TSKgel Super HM-H" from TOSOH Corporation as columns, and a 10 mmol/l sodium trifluoroacetate solution in hexafluoroisopropanol (HFIP) as an eluent; conducted at a resin concentration of 0.02% by weight, a column temperature of 40°C and a flow rate of 0.3 ml/min; and using a refractive index detector (RI). The analytical curve is prepared by dissolving PMMA in HFIP, at six levels of concentration.

The XD-based polyamide resin suitably employed here has a terminal amino group concentration ($[NH_2]$) of preferably less than 100 microequivalent/g, more preferably 5 to 75 microequivalent/g, and even more preferably 10 to 60 microequivalent/g; and a terminal carboxy group concentration ([COOH]) of preferably less than 150 microequivalent/g, more preferably 10 to 120 microequivalent/g, and even more preferably 10 to 100 microequivalent/g. By using the XD-based polyamide resin with such terminal group concentrations, the XD-based polyamide resin will be more likely to show a stabilized viscosity during forming into film-like article or fiber-like article , and will more likely be reactive with a carbodiimide compound described later.

Those having a ratio of the terminal amino group concentration relative to the carboxy group concentration ($[NH_2]$ / [COOH]) of 0.7 or smaller are preferable, which is more preferably 0.6 or smaller, and particularly 0.5 or smaller. Those having the ratio exceeding 0.7 may occasionally be difficult to control the molecular weight, in the process of polymerizing the XD-based polyamide resin.

The terminal amino group concentration may be determined by dissolving-0.5 g of the XD-based polyamide resin into 30 ml of phenol/methanol (4:1) mixed solution at 20 to 30°C under stirring, and then titrating the solution with a 0.01 N hydrochloric acid. Meanwhile, the terminal carboxy group concentration may be determined by dissolving 0.1 g of the XD-based polyamide resin into 30 ml of benzyl alcohol at 190°C, cooling the mixture on a water bath at 40°C, and then titrating the mixture with a 0.01 N potassium hydroxide solution.

As for a method for manufacturing the XD-based polyamide resin, the description in paragraphs [0052] and [0053] of JP-A-2014-173196 may be referred to.

In this invention, the XD-based polyamide resin preferably has a melting point of 150 to 350°C, which is more preferably 180 to 300°C, and even more preferably 180 to 250°C.

The XD-based polyamide resin preferably has a glass transition point of 50 to 100°C, which is more preferably 55 to 100°C, and particularly 60 to 100°C. Within these ranges, the resin will have an improved heat resistance.

The melting point in this invention means a temperature at which an endothermic peak becomes deepest (peak top) in DSC (differential scanning calorimetry) during a heating process, and is more specifically a value obtained by measurement according to the method described later in EXAMPLES . If the measuring instrument described later in EXAMPLES is no more available typically because the production has been discontinued, any other equivalent instrument may be employed for the measurement. The same will apply also to other methods of measuring.

The glass transition temperature is measured after once heating and melting a sample so as to cancel any influences of the thermal history on the crystallinity, and by heating the sample again. The measurement may be conducted typically by using "DSC-60" from Shimadzu Corporation, approximately 1 mg of the sample, and nitrogen as an atmospheric gas fed at a flow rate of 30 ml/min, wherein the polyamide resin is melted under heating at a heating rate of 10°C/min from room temperature up to a temperature above a predicted melting point, rapidly cooled on dry ice, and re-heated up to a temperature above the melting point at a heating rate of 10°C/min, to determine the glass transition point.

The lower limit of crystallization temperature of the XD-based polyamide resin during heating is preferably 50°C or above, more preferably 80°C or above, even more preferably 100°C or above, particularly 120°C or above, and yet more preferably 140°C or above. The upper limit of crystallization temperature of the XD-based polyamide resin during heating is preferably 180°C or below, more preferably 170°C or below, even more preferably 162°C or below, particularly 155°C or below, and yet more preferably 148 °C or below.

The XD-based polyamide resin used in this invention, when blended with 5% by weight of the compound represented by Formula (1), preferably shows a crystallization temperature, during heating, lower than that of a resin not blended with the compound represented by Formula (1), wherein the difference is preferably 3°C or larger, more preferably 5°C or larger, and particularly 10°C or larger. Although the upper limit of the difference of crystallization temperature during heating is not specifically limited, it may typically be 40°C or smaller, also be 35°C or smaller, and particularly be 30°C or smaller.

A method for measuring the crystallization temperature during heating follows the description later in EXAMPLES.

The ratio of the XD-based polyamide resin in the polyamide resin composition of this invention is 50% by weight or more, preferably 60% by weight or more, even more preferably 70% by weight or more, and may also be 80% by weight or more.

<Other Polyamide Resin>

The polyamide resin composition of this invention may also contain a polyamide resin other than the above-described XD-based polyamide resin. Such other polyamide resin is exemplified by polyamide 4, polyamide 6, polyamide 11, polyamide 12, polyamide 46, polyamide 66, polyamide 610, polyamide 612, polyhexamethylene terephthalamide (polyamide 6T), polyhexamethylene isophthalamide (polyamide 6I), polyamide 66/6T, polyamide 9T, polyamide 9MT, and polyamide 6I/6T. Among such other polyamide resins, when contained, at least one of polyamide 6 and polyamide 66 is preferable.

The content of such other polyamide resin, when blended, in the polyamide resin composition of this invention is preferably 1 to 50 parts by weight per 100 parts by weight of the XD-based polyamide resin, and more preferably 5 to 40 parts by weight.

<Compound Represented By Formula (1) >

The polyamide resin composition of this invention contains the compound represented by Formula (1).

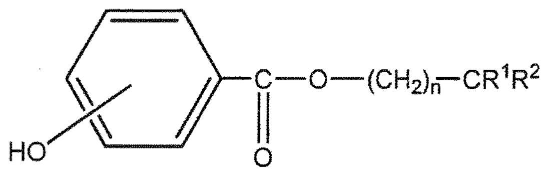

In Formula (1), $R^1$ represents an alkyl group having 1 to 10 carbon atoms, $R^2$ represents an alkyl group having 2 to 12 carbon atoms, and n represents an integer of 1 to 3.

In the compound represented by Formula (1), the moiety of OH group is presumed to improve affinity with the XD-based polyamide resin. The moiety of OH group may substitute at any of the ortho, meta and para positions, wherein the para position is more preferable.

In the compound represented by Formula (1), the group represented by- $(CH_2)_n$- is presumed to serve as a linking group that combines the hydroxyphenyl ester group and $-CR^1R^2$. n Is preferably 1 or 2, and more preferably 1.

In the compound represented by Formula (1), $-CR^1R^2$ is presumed to serve as a moiety that enhances the compatibility with the XD-based polyamide resin. In the compound represented by Formula (1), $R^1$ is preferably an alkyl group having 1 to 9 carbon atoms, more preferably an alkyl group having 2 to 9 carbon atoms, even more preferably an alkyl group having 2 to 8 carbon atoms, particularly an alkyl group having 3 to 7 carbon atoms, and yet more preferably an alkyl group having 4 to 6 carbon atoms. The alkyl group represented by $R^1$ is preferably a straight-chain or branched alkyl group, and is more preferably a straight-chain alkyl group.

In the compound represented by Formula (1), $R^2$ preferably represents an alkyl group having 2 to 10 carbon atoms, more preferably an alkyl group having 3 to 9 carbon atoms, even more preferably an alkyl group having 5 to 9 carbon atoms, and particularly an alkyl group having 6 to 8 carbon atoms. The alkyl group represented by $R^2$ is preferably a straight-chain or branched alkyl group, and is more preferably a straight-chain alkyl group.

In this invention, in the compound represented by Formula (1), $R^2$ preferably has two or more, and more preferably two to four more carbon atoms than $R^1$. With such configuration, the effects of this invention will be demonstrated more effectively.

Examples of the compound represented by Formula (1) will be shown below. This invention is however of course not limited thereto:

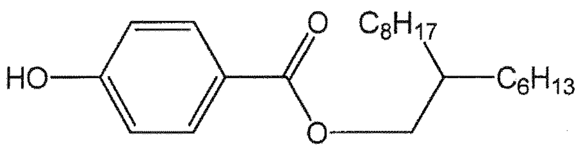

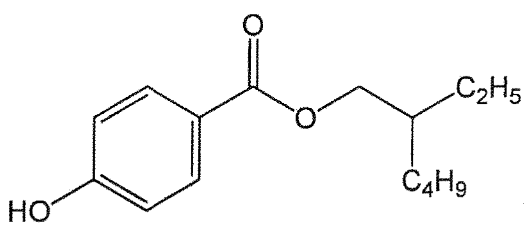

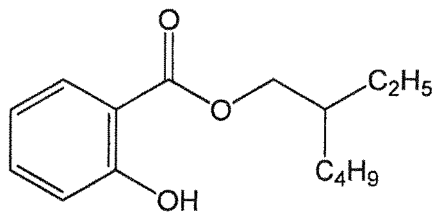

The polyamide resin composition contains 0.5 to 15 parts by weight of the compound represented by Formula (1), per 100 parts by weight of a polyamide resin. The lower limit value of the content of the compound represented by Formula (1) is 0.5 parts by weight or above, preferably 0.6 parts by weight or above, more preferably 0.8 parts by weight or above, even more preferably 1.0 parts by weight or above, and yet more preferably 2.0 parts by weight or above . The upper limit value is 15 parts by weight or below, preferably 10 parts by weight or below, even more preferably 8 parts by weight or below, and yet more preferably 7 parts by weight or below.

Only a single species, or two or more species, of the compound represented by Formula (1) may be used. When two or more species are used, the total content preferably falls within the above-described ranges.

The melt viscosity may be lowered by adding preferably 8 to 15 parts by weight, and more preferably 9 to 13 parts by weight of compound represented by Formula (1), per 100 parts by weight of polyamide resin. More specifically, the polyamide resin composition containing the above-described ratio of the compound represented by Formula (1) can give a melt viscosity of 500 Pa· s, at 260°C and an apparent shear velocity of 122 $s^{-1}$. The lower limit value of the melt viscosity in this case may typically, but not specifically, be 400 Pa·s or larger. The polyamide resin composition containing the above-described ratio of the compound represented by Formula (1) can also elevate a temperature at which the weight is reduced by 3% by weight from the weight measured at 150°C, when heated at a heating rate of 10°C/min. In particular, these effects are demonstrated more distinctively than in the case where any plasticizer other than the compound represented by Formula (1) were added.

Only a single species, of two or more species of the compound represented by Formula (1) may be used. When two or more species are used, the total content preferably falls within the above-described ranges.

The polyamide resin composition of this invention may contain one, or two or more species of other plasticizers other than the compound represented by Formula (1). Such other plasticizers are exemplified by the plasticizers described in paragraph [0039] of JP-A-H07-1113 1. It is, however, preferable to compose the polyamide resin composition of this invention, so as to contain substantially no plasticizer other than the compound represented by Formula (1) . The phrase stating that "to contain substantially no ..." means, for example, that the content of such other plasticizer in the polyamide resin composition of this invention is 0.1% by weight or less of the weight of the compound represented by Formula (1).

<Other Resin Component>

The polyamide resin composition of this invention may contain other resin component other than the polyamide resin. Such other resin component other than the polyamide resin is exemplified by polyolefin resins such as polyethylene and polypropylene; polyester resins such as polyethylene terephthalate and polybutylene terephthalate; and thermoplastic resins such as polycarbonate resin, polyoxymethylene resin, polyether ketone, polyethersulfone, and thermoplastic polyether.

The polyamide resin composition of this invention may also be configured to contain substantially no thermoplastic resin other than the polyamide resin. The phrase stating that "to contain substantially no ..." means, for example, that the content of the thermoplastic resin other than the polyamide resin in the polyamide resin composition of this invention is 5% by weight or less of the weight of the polyamide resin.

<Other Additives>

The polyamide resin composition of this invention may additionally contain additives such as antioxidant, stabilizers such as heat stabilizer, hydrolysis modifier, weathering stabilizer, matting agent, UV absorber, nucleating agent, plasticizer, dispersion aid, flame retarder, antistatic agent, anti-coloring agent, antigelling agent, colorant, and mold releasing agent, within the range the objects and effects of this invention will not be adversely affected. Regarding details of these additives, the description in paragraphs [0130] to [0155] of JP-B1-4894982 may be referred to.

The polyamide resin composition is, however, preferably such that the XD-based polyamide resin and the compound represented by Formula (1) collectively account for 80% by weight or more of the total, and more preferably 90% by weight or more.

Although the polyamide resin composition of this invention may contain a filler such as carbon fiber, it preferably contains substantially no filler. The phrase stating that "contains substantially no ..." means, for example, that the amount of blending of the filler is 3% by weight or less of the polyamide resin composition of this invention.

The polyamide resin composition of this invention is preferably used for manufacturing a polyamide resin fiber , and more preferably, used for a streched polyamide resin fiber as described above. And, it may also be used for other purposes.

The polyamide resin composition of this invention preferably has a melting point of 150 to 350°C, more preferably 180 to 300°C, and even more preferably 180 to 250°C.

The lower limit of the crystallization temperature of the polyamide resin composition of this invention during heating is preferably 50°C or above, more preferably 80°C or above, even more preferably 100°C or above, and particularly

120°C or above, further may be 140°C or more. The upper limit of the crystallization temperature of the polyamide resin composition of this invention during heating is preferably 180°C or below, more preferably 170°C or below, even more preferably 162°C or below, particularly 155°C or below, and further preferably 148°C or below.

The polyamide resin composition used in this invention is blended with 5% by weight of the compound represented by Formula (1) preferably shows the crystallization temperature during heating, lower than the crystallization temperature during heating shown by the polyamide resin not blended with the compound represented by Formula (1), wherein the difference is preferably 3°C or larger, more preferably 5°C or larger, and even more preferablt 10 °C or larger. Although the difference of crystallization temperature during heating is not specifically limited, it may typically be 40°C or smaller, further may be 35°C or smaller, and may particularly be 30°C or smaller.

Characteristics of Polyamide Resin Fiber

The polyamide resin fiber of this invention may satisfy the following property: when fixed and brought into contact with aluminum oxide-derived abrasive ceramic plates by rotating a friction disk at a rotational speed of 120 rpm so as to apply an average load of 150 g to the fiber, it breaks when the number of rotation (occasionally referred to as "wear resistance-affordable number of rotation") reached 100 or larger. Such high wear resistance may be achieved by adding the compound represented by Formula (1) to the XD-based polyamide resin, followed by drawing.

The wear resistance-affordable number of rotation may be measured typically by using a testing apparatus, on which a fiber to be measured is allowed to pass through the individual yarn guides, and fixed at both ends to terminals using clips for applying an arbitrary load, engaged with a recording pen, and subjected to load applied through 11 differently shaped aluminum oxide-derived ceramic plates, which are frictional chips, attached to a friction disk that rotates upon the apparatus is powered on. The parameter is given by the number of rotation at which the fiber breaks. This sort of testing apparatus is exemplified by a yarn cohesion tester (Sen-i Kogaku (Fiber Engineering), Vol.26, No.7, 1973, the yarn cohesion tester appears in Fig. 1 on page 564), manufactured by Hiruta Riken Co., Ltd. The wear resistance-affordable number of rotation in this invention is more specifically defined by a value measured by a method described later in EXAMPLES.

The polyamide resin fiber of this invention may be drawable to a larger of draw ratio, and owing to mixing with the compound represented by Formula (1) (plasticizer), it can achieve a large wear resistance. The wear resistance-affordable number of rotation in this invention is preferably 100 or larger. Although the larger the wear resistance-affordable number of rotation the better, the upper limit value is not specifically limited, and for example even a value of 250 or smaller is practically acceptable level for the case where a polyamide resin, in which 50 mol% or more of the dicarboxylic acid-derived structural unit is derived from adipic acid, is used. When the polyamide resin in which 50 mol% or more of the dicarboxylic acid-derived structural unit is derived from sebacic acid, even a value of 1500 or smaller would be practically excellent.

The polyamide resin fiber of this invention may have a tensile strength, measured according to JIS L1013, of 2 . 0 cN/dtex or larger, and more preferably 2.2 cN/dtex or larger. Although the higher the tensile strength the better, the upper limit value is not specifically limited, and for example even a value of 4.0 cN/dtex or smaller is practically acceptable for the case where a polyamide resin, in which 50 mol% or more of the dicarboxylic acid-derived structural unit is derived from adipic acid, is used. Also a value of 8.0 cN/dtex or smaller is practically acceptable for the case where a polyamide resin, in which 50 mol% or more of the polyamide dicarboxylic acid-derived structural unit is derived from sebacic acid, is used.

The polyamide resin fiber of this invention preferably has a phosphorus atom concentration of 0.1 to 10 ppm, and more preferably 1 to 8 ppm. Within these ranges, the fiber will be prevented from yellowing, and at the same time will have an improved continuous productivity, demonstrating the effects of this invention more effectively. Now the phosphorus component contained in the polyamide resin fiber is exemplified by phosphorus component derived from the polyamide resin, or various additives (flame retardant, for example).

The length (weight-average length) of the polyamide resin fiber of this invention is typically, but not specifically limited to, 2 cm or longer, preferably in the range from 0.1 m to 20,000 m, more preferably from 1 m to 10,000 m, and even more preferably 100 m to 7,000 m.

The lower limit value of the fineness of the polyamide resin fiber of this invention is preferably 50 dtex or above, more preferably 60 dtex or above, even more preferably 70 dtex or above, particularly 80 dtex or above, and furthermore preferably 110 dtex or above . The upper limit value is preferably 10,000 dtex or below, more preferably 1000 dtex or below, even more preferably 800 dtex or below, and particularly 600 dtex or below. Such polyamide resin fiber, although may be a monofilament, is typically a multifilament composed of two or more monofilaments. The polyamide resin fiber of this invention, when given as the multifilament, preferably has the number of fibers of 10 to 1000 f, more preferably 10 to 500 f, and even more preferably 20 to 100 f.

In particular, the number of fibers is preferably 60 dtex to 120 dtex for apparel use, preferably 100 to 1500 dtex for industrial use such as fishing net, and preferably 1000 to 3000 dtex for tire cord.

The polyamide resin fiber of this invention typically has a circular cross-sectional shape. The "circular" does not only cover a mathematical circle, but also those regarded as nearly circle in the technical field of this invention. The polyamide resin fiber of this invention may have a cross-sectional shape other than circle, such as ellipsoid, oval, and other oblong shapes.

Next, the polyamide resin fiber of this invention, given a multifilament form, will be explained. Note however that the present invention is by no means limited to the examples below. As will be detailed later, a method for manufacturing the polyamide resin fiber of this invention may include a process of bundling the monofilaments of the polyamide resin fiber.

The multifilament according to a first embodiment of this invention relates to bundling of the polyamide resin fibers, by using at least either one of sizing agent or surface treatment agent (occasionally referred to as oil agent, sizing agent, etc.). The sizing agent and surface treatment agent in this case are not specifically limited so long as they can bundle the polyamide resin fibers, and may be exemplified by oil agents such as mineral oil, animal/plant oil; and surfactants such as nonionic surfactant, anionic surfactant and amphoteric surfactant. More specifically, preferable examples include ester-based compound, alkylene glycol-based compound, polyolefin-based compound, phenylether-based compound, polyether-based compound, silicone-based compound, polyethylene glycol-based compound, amido-based compound, sulfonate-based compound, phosphate-based compound, carboxylate-based compound, and combinations of two or more of these compounds.

The amount of consumption of the sizing agent and surface treatment agent, used for the polyamide resin fiber, is preferably 0.1 to 5.0% by weight in total relative to the polyamide resin fiber, and more preferably 0.5 to 2.0% by weight.

Methods for treating the polyamide resin fiber with the sizing agent and/or surface treatment agent are not specifically limited, so long as intended objectives will be fulfilled. For example, a solution containing the treatment agent and/or surface treatment agent dissolved therein may be applied to the thermoplastic resin fiber, so as to allow the treatment agent and/or surface treatment agent to adhere onto the surface of the thermoplastic resin fiber. The treatment agent and/or surface treatment agent may alternatively be blown with air onto the surface of the thermoplastic resin fiber.

The multifilament according to a second embodiment of this invention relates to a method of twisting the fibers into bundle. When twisted, only the polyamide resin fiber may be twisted, or it may be twisted together with other resin fiber or with a fiber other than the resin fiber. The fiber other than the resin fiber is exemplified by carbon fiber. The twisting preferably comes after drawing, or even after the drawing and successive heat setting.

Alternatively, the twisting may be accompanied by the treatment with the sizing agent or surface treatment agent, as described previously regarding the first embodiment of the multifilament.

Methods of twisting may be any of known methods without special limitation. The number of turns in twisting may suitably be determined depending on the number of fibers, fineness and so forth of the polyamide resin fiber, and is typically within the range from 1 to 200 turns/m (fiber length), more specifically 1 to 100 turns/m, even more specifically 1 to 70 turns/m, and particularly 1 to 50 turns/m.

The multifilament according to a third embodiment of this invention is exemplified by provision of a core-in-sheath structure. The core-in-sheath structure refers to a structure typically having two or more regions, just like a lead and a barrel of a pencil. In this invention, it is preferable to use the polyamide resin fiber given in the form of monofilament or multifilament as the core, and to provide therearound a layer structure as the sheath. With such structure, the polyamide resin fiber will have modified characteristics, making it adaptable to a wider range of applications.

The core and the sheath are not always necessarily discriminable clearly as separate regions. For example, as for the multifilament whose core is composed of a plurality of polyamide resin fibers, a part of a material that composes the sheath may be impregnated among the polyamide resin fibers that compose the multifilament.

The core may be composed of polyamide resin fiber only, or may contain other fiber and so forth. The core may also be the multifilaments of the aforementioned first and second embodiments.

Meanwhile, the sheath may suitably be selected depending on applications. For example, use of an adhesive for the sheath is preferable since it can act to adhere the multifilaments when they are processed typically into non-woven fabric. It is preferable for the sheath to employ a resin composition whose melting point is lower than that of the polyamide resin fiber core, such as employing polyamide resin (MXD6) for the core, and polypropylene resin (PP) for the sheath, since the sheath can act as an adhesive under heating.

Method for Manufacturing Polyamide Resin Fiber

The method for manufacturing a polyamide resin fiber of this invention characteristically includes drawing a fiber composed of a polyamide resin composition; wherein the polyamide resin composition includes 0.5 to 15 parts by weight of the compound represented by Formula (1), per 100 parts by weight of a polyamide resin; the polyamide resin is composed of a diamine-derived structural unit and a dicarboxylic acid-derived structural unit; 50 mol% or more of the diamine-derived structural unit is derived from xylylenediamine, and 50 mol% or more of the dicarboxylic acid-derived structural unit is derived from a straight chain aliphatic $\alpha,\omega$-dicarboxylic acid having 4 to 20 carbon atoms. With such

configuration, the obtainable polyamide resin fiber will have a high durability. Since the polyamide resin fiber manufactured by the method of this invention will be highly durable and less breakable during continuous production, so that the manufacturing method will be very suitable for continuous production (in particular, continuous production of 100 m or longer fiber). The polyamide resin (XD-based polyamide resin) and the compound represented by Formula (1) are synonymous to those described above, within the same preferable ranges.

The polyamide resin fiber is usually manufactured by melt spinning. The method for manufacturing a polyamide resin fiber is exemplified by a method that includes melt-spinning the polyamide resin composition; allowing the melt-spun fiber composed of the polyamide resin composition to pass through a cooling zone; and drawing the fiber composed of the polyamide resin composition.

The method may also include allowing the melt-spun fiber composed of the polyamide resin composition to pass through a hot zone, prior to allowing the fiber to pass through the cooling zone. The method may also include applying a sizing agent and/or surface treatment agent to the fiber composed of the polyamide resin composition, subsequently to allowing the fiber to pass through the cooling zone, and prior to drawing the fiber composed of the polyamide resin composition. In addition, the method may even include, subsequently to the drawing process, heat-setting the fiber composed of the polyamide resin composition. The heat setting may further be followed by twisting the fiber composed of the polyamide resin composition.

The method for manufacturing a polyamide resin fiber of this invention will specifically be explained below referring to FIG. 1, without limiting this invention.

A polyamide resin composition that contains an XD-based polyamide resin, the compound represented by Formula (1) and other additives is allowed to melt, and ejected through a spinneret (reference numeral "1" in FIG. 1). The temperature at which the composition is ejected through the spinneret 1 is defined as the spinning temperature.

The spinneret may have a single hole, or may have two or more holes. For example, a multifilament is preferably manufactured through the holes whose number corresponds to the number of fibers. A spinneret having 10 to 100 holes is exemplified. The lower limit value of the temperature of the polyamide resin composition upon ejection (spinning temperature) is preferably not lower than the melting point of the XD-based polyamide resin, preferably 5°C or more higher than the melting point of the XD-based polyamide resin, and more preferably 10°C or more higher than the melting point of the XD-based polyamide resin. The upper limit value of the temperature of the polyamide resin composition upon ejection may typically, but not specifically, be 60°C or less higher than the melting point of the XD-based polyamide resin. When two or more species of the XD-based polyamide resin are contained, the temperature of the XD-based polyamide resin upon ejection is preferably determined based on the melting point of the XD-based polyamide resin whose melting point of lowest. When the XD-based polyamide resin has two or more melting points, the temperature is preferably determined based on the lowest melting point.

The thus spun fiber composed of the polyamide resin composition is usually allowed to pass through the hot zone and the cooling zone. When the melt polyamide resin composition passes through the spinneret, the polyamide resin composition causes orientation. The hot zone, typically several tens centimeters long, works to relax the orientation of the polyamide resin composition. The cooling zone, typically several meters long, works to cool down the fiber composed of the polyamide resin composition enough to be drawable, where cold air is blown against the fiber composed of the polyamide resin composition. The cold air in the cooling zone is preferably blown at a temperature of 10 to 100°C and at a velocity of 10 to 50 m/min. The fiber that comes out from the cooling zone is preferably at around room temperature (10 to 40°C, for example) .

The spun fibers composed of the polyamide resin composition may be bundled. Methods for bundling the fiber are preferably as described regarding the multifilament in the first and second embodiments. For example, as illustrated in FIG. 1, the sizing agent and/or surface treatment agent may be applied to bundle the fibers. Means for applying the sizing agent and/or surface treatment agent, illustrated in FIG. 1 as a process of dipping into a solution 2 that contains the sizing agent and/or surface treatment agent, may be any other means. Of course, the polyamide resin to be manufactured may be a monofilament, for which such process is omissible.

The melt spun fiber, composed of the polyamide resin composition, is preferably drawn. Either the melt spun fiber composed of the polyamide resin composition may directly be drawn, or the bundled fiber may be drawn. Drawing of the bundle is a general practice. The drawing may take place in a single stage, or in two or more stages . Drawing preferably takes place in two or more stages, more preferably in 2 to 4 stages, and even more preferably in 2 or 3 stages.

When drawn in two or more stages, the draw ratio in the second or succeeding stages is preferably increased in sequence from the draw ratio in the first stage. Although depending on applications, the draw ratio in the first drawing is preferably 1.03 or larger, more preferably 1.03 to 3.0, and even more preferably 1.03 to 2.0. The draw ratio in the second drawing is preferably 1.5 to 10.0, more preferably 2.0 to 6.0, and even more preferably 2.5 to 5.0. This embodiment is particularly preferable, when the polyamide resin, in which 50 mol% or more of the dicarboxylic acid-derived structural unit is derived from adipic acid, is used.

In another embodiment where the fiber is drawn in two or more stages, the draw ratio in the second and succeeding stages may alternatively be decreased in sequence from the draw ratio in the first stage. In this case, the

draw ratio in the first stage is preferably 1.5 to 10.0, more preferably 2.0 to 6.0, and even more preferably 2.5 to 5.0. Although depending on applications, the draw ratio in the second drawing is preferably 1.03 or larger, more preferably 1.03 to 3.0, and even more preferably 1.03 to 2.0. This embodiment is particularly preferable, when the polyamide resin, in which 50 mol% or more of the dicarboxylic acid-derived structural unit is derived from sebacic acid, is used.

When manufactured by using rolls, a slight difference of roll speed would occur even between rolls PR and GR1 in FIG. 1, which results in drawing only to a slight degree (for example, drawing by a draw ratio of smaller than 1.06, and even smaller than 1.03) .

The drawing preferably takes place using two rolls (drawing rolls) that rotate at different peripheral speeds. The difference between the peripheral speeds of two rolls gives the draw ratio. In other words, the draw ratio between two rolls is given by (peripheral speed of roll over which fiber passes later) / (peripheral speed of roll over which fiber passes earlier) . In FIG. 1, the spun fiber is slightly drawn (stretched) between the roll PR and roll GR1, subjected to the first drawing between roll GR1 and roll GR2, and subjected to the second drawing between roll GR2 and roll GR3. More specifically, roll GR1 rotates at higher peripheral speed than roll PR, roll GR2 rotates at higher peripheral speed than roll GR1, and roll GR3 rotates at higher peripheral speed than roll GR2.

In this invention, the lower limit value of the total draw ratio of the fiber composed of the polyamide resin composition is preferably 1.5 or larger, more preferably 4.1 or larger, even more preferably 4.2 or larger, yet more preferably 4.5 or larger, and even may be 5.0 or larger. The upper limit value is preferably 15 or smaller, more preferably 10 or smaller, particularly 8 or smaller, and furthermore preferably 5.5 or smaller. The total draw ratio is given by a product of the individual draw ratios.

For drawing over rolls, the total draw ratio is calculated by the equation below:

$$\text{Total draw ratio} = \text{Roll speed A/Roll speed B}$$

where, roll speed A represent the speed of roll over which the fiber passes last out of all drawing rolls, and roll speed B represents the speed of roll over which the fiber passes first out of all drawing rolls.

The drawing may be, and preferably, accompanied by heating. The heating is preferably given by controlling the surface temperature of the rolls. The surface temperature of the rolls may suitably be determined depending on types of the XD-based polyamide resin, desired draw ratio and so forth. In the example illustrated in FIG. 1, the surface temperature of roll GR1 may be set 180 to 130°C lower than the melting point of the XD-based polyamide resin, the surface temperature of roll GR2 may be set 5 to 25°C higher than the surface temperature of roll GR1, and the surface temperature of roll GR3 may be set 26 to 100°C higher than the surface temperature of roll GR2.

In the process of manufacturing the polyamide resin fiber, some type of the plasticizer would vaporize and adhere onto the rolls, to thereby make the drawing difficult. Such problem is now avoidable by using the compound represented by Formula (1).

The fineness of the fiber before being drawn (fineness of the bundled fibers) is preferably 50 to 10,000 dtex, more preferably 100 to 8000 dtex, even more preferably 100 to 5000 dtex, yet more preferably 200 to 4000 dtex, and furthermore preferably 300 to 3000 dtex. The number of fibers of multifilament before being drawn is preferably 10 to 1000 f, more preferably 10 to 500 f, and even more preferably 20 to 100 f.

In the method for manufacturing a polyamide resin fiber of this invention, the drawing may be followed by relaxation. For example in FIG. 1, the relaxation may be given between roll GR3 and roll GR4, and between roll GR4 and roll WD. In other words, the relaxation is preferably given between the rolls (relaxation rolls) that rotate at different peripheral speeds.

When relaxed over rolls, the relaxation rate may be calculated by the equation below, which is preferably 1 to 10%, and more preferably 2 to 5%:

$$\text{Relaxation ratio (\%)} = \{1 - (\text{roll speed C/roll speed D})\} \times 100$$

where, roll speed C represents the speed of roll over which the fiber passes last out of all relaxation rolls, and roll speed D represents the speed of roll over which the fiber passes first out of all relaxation rolls. Note that the relaxation roll over which the fiber passes first is usually the drawing roll over which the fiber passes last. In short, in some cases, a single roll functions as both of relaxation roll and drawing roll.

As for the surface temperature of the rolls during relaxation, the surface temperature of roll GR4, exemplified in FIG. 1, may be set 20 to 80°C lower than the surface temperature of roll GR3.

The relaxed polyamide resin fiber is typically taken up onto a roll or the like, and stored. The obtained polyamide

resin fiber may be cut for various applications.

The thus relaxed polyamide resin fiber of this invention preferably has final draw ratio of 4.0 or larger, more preferably 4.2 or larger, and even may be 5.0 or larger. The upper limit value of the final draw ratio may typically, but not specifically, be 6.0 or smaller.

Now the final draw ratio means the draw ratio of the finally obtained polyamide resin fiber as compared with that of the undrawn fiber, calculated by the equation below using the total draw ratio and relaxation ratio:

$$\text{Final draw ratio} = (\text{Total draw ratio}) \times \{(100 - \text{relaxation ratio})/100\}$$

Applications of Polyamide Resin Fiber

The polyamide resin fiber of this invention may be used it its intact form, or may be processed into process materials such as commingled yarn and braided cord. It is also preferably used as process materials for woven fabric, knitted fabric and non-woven fabric.

The polyamide resin fiber may be used independently as a fiber component, or may be used in combination with other resin fiber or reinforcing fiber. In particular, the reinforcing fiber is exemplified by carbon fiber and glass fiber.

The polyamide resin fiber and the molding material of this invention are versatile in various fields including automobile and other transport equipment parts, general machinery parts, precision equipment parts, electronic/electric equipment parts, office automation equipment parts, building material/housing equipment parts, medical device, leisure time/sport goods (fishing line, for example), playing tools, medical supplies, daily goods including food wrapping film, and defense/aerospace products.

EXAMPLES

This invention will further be detailed referring to Examples . Materials, amounts of consumption, ratios, process details and procedures described in Examples below may properly be modified without departing from the spirt of this invention. The scope of this invention is therefore not limited to the specific Examples described below.

<Ingredients>

<<Synthesis of Polyamide Resin MXD6>>

To 8.9 kg of adipic acid, added were 0.3 g of sodium hypophosphite monohydrate and 0.1 g of sodium acetate, the mixture was melted under heating at 170°C in a reaction can at 0.1 MPaA, the content was kept stirred, 8.3 kg of metaxylylenediamine was slowly added dropwise over two hours, and the temperature was elevated to 250°C. After the temperature was elevated, the pressure was slowly reduced over one hour down to 0.08 MPaA, and kept for 0.5 hours. After completion of the reaction, the content was taken out in the form of strands, pelletized into pellets using a pelletizer, to obtain 15 kg of pellets. The thus obtained pellets were fed into a tumbler (rotary vacuum chamber) equipped with a heating medium jacket, sustainably heated at 200°C for one hour under reduced pressure (0.5 to 10 Torr) so as to allow the obtained pellets to polymerize in solid phase, to thereby obtain a polyamide resin (MXD6, melting point: 237°C, relative viscosity: 2.65, moisture content: 0.05%).

<<Synthesis of Polyamide Resin MP10>>

To 10.1 kg of sebacic acid, added were 0.3 g of sodium hypophosphite monohydrate and 0.1 g of sodium acetate, the mixture was melted under heating at 170°C in a reaction can at 0.1 MPaA, the content was kept stirred, 6.7 kg of mixed diamine of metaxylylenediamine and paraxylylenediamine (metaxylylenediamine/paraxylylenediamine = 70/30 (% by weight)) was slowly added dropwise over two hours, and the temperature was elevated to 250°C. After the temperature was elevated, the pressure was slowly reduced over one hour down to 0.08 MPaA, and kept for 0.5 hours. After completion of the reaction, the content was taken out in the form of strands, pelletized into pellets using a pelletizer, to obtain 15 kg of pellets. The thus obtained pellets were fed into a tumbler (rotary vacuum chamber) equipped with a heating medium jacket, sustainably heated at 195°C for one hour under reduced pressure (0.5 to 10 Torr) so as to allow the obtained pellets to polymerize in solid phase, to thereby obtain a polyamide resin (MP10, melting point: 213°C, relative viscosity: 2.60, moisture content: 0.03%).

<<Plasticizers>>

HD-PB: hexyldecyl p-hydroxybenzoate, Exceparl HD-PB, from Kao Corporation
EH-PB: ethylhexyl p-hydroxybenzoate, obtained from Tokyo Chemical Industry Co., Ltd.
EH-OB: ethylhexyl o-hydroxybenzoate, obtained from Tokyo Chemical Industry Co., Ltd.
BBSA: N-butylbenzene sulfonamide, BM-4, from Daihachi Chemical Industry Co., Ltd.

Example 1

<Method for Manufacturing Polyamide Resin Fiber>

A polyamide resin composition that contains a plasticizer listed in Table 1 according to a predetermined ratio listed in Table 1 (in parts by weight) per 100 parts by weight of polyamide resin listed in Table 1 was melt spun as illustrated in FIG. 1. More specifically, the polyamide resin composition obtained by melt kneading the individual components was spun into fibers at a spinning temperature of 260°C and an ejection rate of 24 g/min, through a 48-hole spinneret of 0.7 mm wide (the spinning yields a total number of fibers of 48 f). The thus spun fibers made of the polyamide resin composition were then allowed to pass through a hot zone and a cooling zone, and the fibers composed of the polyamide resin composition, cooled almost down to room temperature (may occasionally be referred to as "undrawn fiber", hereinafter) were then dipped into a sizing agent (Delion PP-807, from Takemoto Oil & Fat Co. , Ltd.) (reference numeral "2" in FIG. 1) to be bundled. The bundle was then allowed to pass over the rolls at roll speeds and roll surface temperatures summarized in Table 1. Roll PR was not heated. In Table 1, "Stretch" means drawing between rolls PR and GR1, "First drawing" means drawing between rolls GR1 and GR2, and "Second drawing" means drawing between rolls GR2 and GR3. The total draw ratio is a product of these three draw ratios. The fiber was then relaxed between rolls GR3 and GR4, and further between rolls GR4 and WD, to obtain the polyamide resin fiber. The obtained polyamide resin fiber was taken up onto a roll.

The thus obtained polyamide resin fiber was evaluated regarding various characteristics. Results are summarized in Table 1 below.

<Measurement of Crystallization Temperature of Undrawn Fiber during Heating>

Using DSC-60 from Shimadzu Corporation, while feeding nitrogen gas as an atmospheric gas at 30 ml/min, 1 mg of sample was heated at a heating rate of 10°C/min from room temperature (25°C) up to a temperature not lower than a predicted melting point, and the temperature which corresponds to the top of an observed exothermic peak was defined as the crystallization temperature of the polyamide resin fiber during heating.

<Difference of Crystallization Temperature of Undrawn Fiber during Heating (Δ Crystallization Temperature under Heating)>

Difference of the crystallization temperature of the polyamide resin fiber under heating in each of Examples and Comparative Examples, as compared with the crystallization temperature of the polyamide resin fiber under heating in Comparative Example 1 was calculated.

<Measurement of Melting Point of Undrawn Fiber>

Using DSC-60 from Shimadzu Corporation, while feeding nitrogen gas as an atmospheric gas at 30 ml/min, 1 mg of sample was melted under heating at a heating rate of 10°C/min from room temperature (25°C) up to a temperature not lower than a predicted melting point, the molten polyamide resin fiber was then rapidly cooled on dry ice, re-heated at a heating rate of 10°C/min up to a temperature not lower than the melting point, and the temperature which corresponds to the top of an observed endothermic peak was defined as the melting point of the polyamide resin fiber.

<Measurement of Phosphorus Atom Concentration in Polyamide Resin Fiber>

Precisely weighed was 0.5 g of polyamide resin fiber, 20 ml of concentrated sulfuric acid was added thereto, and the mixture was wet-decomposed on a heater. The product was cooled, 5 ml of hydrogen peroxide was added thereto, and the mixture was heated on a heater for concentration so as to reduce the total volume down to 2 to 3 ml. The mixture was cooled again, and diluted with pure water up to 500 ml. Phosphorus was quantified by RF inductively

coupled plasma (ICP) emission spectrometry at 213.618 nm, using IRIS/IP from Thermo Jarrell Ash Corporation.

<Measurement of Fineness>

The fineness (fineness based on corrected weight) of the polyamide resin fiber was measured under the provision of JIS L1013:2010.

<Shear Strength and Tensile Strength>

Moisture content of the polyamide resin fiber was conditioned in an environment at 23°C, 50%RH according to JIS L1013, and shear strength was measured under conditions including an inter-chuck distance of 20 cm and a tensile speed of 20 cm/min, where the shear strength was given by a load under which the polyamide resin fiber breaks. The tensile strength was determined by dividing the shear strength by the fineness (fineness based on corrected weight) of the polyamide resin fiber, according to JIS L1013.

<Wear Resistance Test>

Using a yarn cohesion tester (that appears in Fig. 1 on page 564, Sen-i Kogaku (Fiber Engineering), Vol.26, No.7, 1973, manufactured by Hiruta Riken Co., Ltd.), the friction disk was rotated at a rotational speed of 120 rpm, so as to bring the aluminum oxide-derived ceramic plates into contact with the polyamide resin fiber to apply thereon a load of 150 g in average, and the number of rotation at which the fiber breaks was measured.

Example 6

A polyamide resin composition that contains a plasticizer listed in Table 1 according to a ratio (in parts by weight) listed in Table 1 per 100 parts by weight of polyamide resin listed in Table 1 was melt spun as illustrated in FIG. 1. More specifically, the polyamide resin composition obtained by melt kneading the individual components was spun into fibers at a spinning temperature of 260°C and an ejection rate of 5 g/min, through a 34-hole spinneret of 0.7 mm wide (the spinning yields a total number of fibers of 34 f). The thus spun fibers made of the polyamide resin composition were then allowed to pass through the hot zone and the cooling zone, and the fibers composed of the polyamide resin composition, cooled almost down to room temperature (may occasionally be referred to as "undrawn fiber", hereinafter) were then dipped into a sizing agent (Delion PP-807, from Takemoto Oil & Fat Co. , Ltd.) (reference numeral "2" in FIG. 1) to be bundled. The bundle was then allowed to pass over the rolls at roll speeds and roll surface temperatures summarized in Table 1. Roll PR was not heated. In Table 1, "Stretch" means drawing between rolls PR and GR1, "First drawing" means drawing between rolls GR1 and GR2, and "Second drawing" means drawing between rolls GR2 and GR3. The total draw ratio is a product of these three draw ratios. The fiber was then relaxed between rolls GR3 and GR4, and between rolls GR4 and WD, to obtain the polyamide resin fiber. The obtained polyamide resin fiber was taken up onto a roll.

The thus obtained polyamide resin fiber was evaluated regarding various characteristics in the same way as in Example 1. Results are summarized in Table 1 below.

Example 7

A polyamide resin composition that contains a plasticizer listed in Table 1 according to a ratio (in parts by weight) listed in Table 1 per 100 parts by weight of polyamide resin listed in Table 1 was melt spun as illustrated in FIG. 1. More specifically, the polyamide resin composition obtained by melt kneading the individual components was spun into fibers at a spinning temperature of 260°C and an ejection rate of 36 g/min, through a 72-hole spinneret of 0.7 mm wide (the spinning yields a total number of fibers of 72 f). The thus spun fibers made of the polyamide resin composition were then allowed to pass through the hot zone and the cooling zone, and the fibers composed of the polyamide resin composition, cooled almost down to room temperature (may occasionally be referred to as "undrawn fiber", hereinafter) were then dipped into a sizing agent (Delion PP-807, from Takemoto Oil & Fat Co. , Ltd.) (reference numeral "2" in FIG. 1) to be bundled. The bundle was then allowed to pass over the rolls at roll speeds and roll surface temperatures summarized in Table 1. Roll PR was not heated. In Table 1, "Stretch" means drawing between rolls PR and GR1, "First drawing" means drawing between rolls GR1 and GR2, and "Second drawing" means drawing between rolls GR2 and GR3. The total draw ratio is a product of these three draw ratios. The fiber was then relaxed between rolls GR3 and GR4, and between rolls GR4 and WD, to obtain the polyamide resin fiber. The obtained polyamide resin fiber was taken up onto a roll.

The thus obtained polyamide resin fiber was evaluated regarding various characteristics in the same way as

in Example 1. Results are summarized in Table 1 below.

<Examples 2 to 5, 8, and Comparative Examples 1 to 5>

The processes were conducted in the same way as in Example 1, except that the materials and drawing conditions were altered as summarized in Table 1.

Results are summarized in Table 1 below.

[Table 1-1]

| Sample No. | | | Example 1 | Example 2 | Example 3 | Example 4 | Example 5 | Example 6 | Example 7 |
|---|---|---|---|---|---|---|---|---|---|
| Raw Materials | Polyamide Resin | | MXD6 | | | | | | |
| | | Type of Plasticizier | HD-PB | HD-PB | EH-PB | EH-OB | HD-PB | HD-PB | HD-PB |
| | Plasticizier | Content of Plasticizier (% by mass) | 1.0 | 5.3 | 3.6 | 3.6 | 0.5 | 1.0 | 1.0 |
| Draw Ratio | Stretching | Times | 1.01 | 1.01 | 1.01 | 1.01 | 1.01 | 1.01 | 1.01 |
| | First Drawing | Times | 1.07 | 1.07 | 1.07 | 1.07 | 1.07 | 1.07 | 1.07 |
| | Second Drawing | Times | 4.29 | 4.29 | 4.29 | 4.29 | 4.29 | 4.29 | 4.29 |
| | Total Draw Ratio | Times | 4.62 | 4.62 | 4.62 | 4.62 | 4.62 | 4.62 | 4.62 |
| | Relaxation Ratio | % | 3.33 | 3.33 | 3.33 | 3.33 | 3.33 | 3.33 | 3.33 |
| | Final Draw Ratio | Times | 4.46 | 4.46 | 4.46 | 4.46 | 4.46 | 4.46 | 4.46 |
| Spinning Speed | | m/min | 130 | 130 | 130 | 130 | 130 | 130 | 130 |
| Roll Speed | PR | m/min | 130 | 130 | 130 | 130 | 130 | 130 | 130 |
| | GR1 | m/min | 131 | 131 | 131 | 131 | 131 | 131 | 131 |
| | GR2 | m/min | 140 | 140 | 140 | 140 | 140 | 140 | 140 |
| | GR3 | m/min | 600 | 600 | 600 | 600 | 600 | 600 | 600 |
| | GR4 | m/min | 590 | 590 | 590 | 590 | 590 | 590 | 590 |
| | WD (=Take-up Speed) | m/min | 580 | 580 | 580 | 580 | 580 | 580 | 580 |
| Roll Surface Temperature | Temperature of GR1 | °C | 80 | 80 | 80 | 80 | 80 | 80 | 80 |
| | Temperature of GR2 | °C | 95 | 95 | 95 | 95 | 95 | 95 | 95 |
| | Temperature of GR3 | °C | 160 | 160 | 160 | 160 | 160 | 160 | 160 |
| | Temperature of GR4 | °C | 110 | 110 | 110 | 110 | 110 | 110 | 110 |

(continued)

| Sample No. | | | Example 1 | Example 2 | Example 3 | Example 4 | Example 5 | Example 6 | Example 7 |
|---|---|---|---|---|---|---|---|---|---|
| Properties of Polyamide Resin Fiber | Crystallization Temperature (Undrawn) | °C | 146 | 126 | 143 | 143 | 146 | 146 | 146 |
| | Δ Crystallization Temperature (Undrawn) | °C | -3 | -23 | -6 | -6 | -3 | -3 | -3 |
| | Melting Point (Undrawn) | °C | 236 | 236 | 236 | 236 | 236 | 236 | 236 |
| | Phosphorus Atom Concentration | ppm | 5 | 5 | 5 | 5 | 5 | 5 | 5 |
| | Fineness | dtex | 466 | 478 | 501 | 495 | 458 | 110 | 756 |
| | Shear Strength | cN | 1117 | 1121 | 1214 | 1190 | 1109 | 262 | 1830 |
| | Tensile Strength | cN/dtex | 2.40 | 2.34 | 2.42 | 2.40 | 2.42 | 2.37 | 2.42 |
| | Wear Resistance | Times | 195 | 226 | 205 | 204 | 188 | 104 | 236 |

[Table 1-2]

| Sample No. | | | Example 8 | Comparative Example 1 | Comparative Example 2 | Comparative Example 3 | Comparative Example 4 | Comparative Example 5 |
|---|---|---|---|---|---|---|---|---|
| Raw Materials | Polyamide Resin | | MP10 | MXD6 | | | | MP10 |
| | Plasticizier | Type of Plasticizier | HD-PB | None | None | HD-PB | BBSA | None |
| | | Content of Plasticizier(%by mass) | 1.0 | 0.0 | 0.0 | 25.0 | 5.3 | 0.0 |
| Draw Ratio | Stretching | Times | 1.05 | 1.01 | 1.01 | 1.01 | 1.01 | 1.05 |
| | First Drawing | Times | 4.30 | 1.07 | 1.07 | 1.07 | 1.07 | 4.30 |
| | Second Drawing | Times | 1.15 | 3.79 | 4.29 | 4.29 | 4.29 | 1.15 |
| | Total Draw Ratio | Times | 5.20 | 4.08 | 4.62 | 4.62 | 4.62 | 5.20 |
| | Relaxation Ratio | % | 2.62 | 2.83 | 3.33 | 3.33 | 3.33 | 2.62 |
| | Final Draw Ratio | Times | 5.06 | 3.96 | 4.46 | 4.46 | 4.46 | 5.06 |
| Spinning Speed | | m/min | 125 | 130 | 130 | 130 | 130 | 125 |
| Roll Speed | PR | m/min | 125 | 130 | 130 | 130 | 130 | 125 |
| | GR1 | m/min | 131 | 131 | 131 | 131 | 131 | 131 |
| | GR2 | m/min | 563 | 140 | 140 | 140 | 140 | 563 |
| | GR3 | m/min | 650 | 530 | 600 | 600 | 600 | 650 |
| | GR4 | m/min | 633 | 520 | 590 | 590 | 590 | 633 |
| | WD (=Take-up Speed) | m/min | 600 | 515 | 580 | 580 | 580 | 600 |
| Roll Surface Temperature | Temperature of GR1 | °C | 65 | 85 | 80 | 80 | 80 | 65 |
| | Temperature of GR2 | °C | 110 | 100 | 95 | 95 | 95 | 110 |
| | Temperature of GR3 | °C | 160 | 160 | 160 | 160 | 160 | 160 |
| | Temperature of GR4 | °C | 110 | 110 | 110 | 110 | 110 | 110 |

(continued)

| Sample No. | | | Example 8 | Comparative Example 1 | Comparative Example 2 | Comparative Example 3 | Comparative Example 4 | Comparative Example 5 |
|---|---|---|---|---|---|---|---|---|
| Properties of Polyamide Resin Fiber | Crystallization Temperature (Undrawn) | °C | 101 | 149 | 149 | 125 | 141 | 104 |
| | Δ Crystallization Temperature (Undrawn) | °C | -3 | 0 | 0 | -24 | -8 | 0 |
| | Melting Point (Undrawn) | °C | 213 | 237 | 237 | 236 | 236 | 213 |
| | Phosphorus Atom Concentration | ppm | 5 | 5 | 5 | 5 | 5 | 5 |
| | Fineness | dtex | 488 | 535 | - | - | - | - |
| | Shear Strength | cN | | 1025 | - | - | - | - |
| | Tensile Strength | cN/dtex | | 1.91 | - | - | - | - |
| | Wear Resistance | Times | | 47 | - | - | - | - |

Referring to Table above, in Comparative Example 2, the fiber composed of the polyamide resin composition broke on the occasion of drawing. In Comparative Example 3, the fiber composed of the polyamide resin composition adhered to the rolls during the drawing and broke. In Comparative Example 4, the fiber composed of the polyamide resin composition broke on the occasion of drawing. In Comparative Example 5, the fiber composed of the polyamide resin composition broke on the occasion of drawing.

<Manufacture of Woven Fabrics>

Using the polyamide resin fibers as warps and wefts, plain weave fabrics with a basis weight of 300 $g/m^2$ were manufactured. The fabrics relevant to Examples were confirmed to have high durability.

<Manufacture of Knitted Fabrics>

Using the polyamide resin fibers, jersey fabrics with a basis weight of 300 $g/m^2$ were manufactured. The fabrics relevant to Examples were confirmed to have high durability.

REFERENCE SIGNS LIST

1 spinneret
2 sizing agent
11 hot zone
12 cooling zone

## Claims

1. A polyamide resin fiber comprising 0.5 to 15 parts by weight of a compound represented by Formula (1), per 100 parts by weight of a polyamide resin,
   the polyamide resin being composed of a diamine-derived structural unit and a dicarboxylic acid-derived structural unit,
   50 mol% or more of the diamine-derived structural unit being derived from xylylenediamine, and 50 mol% or more of the dicarboxylic acid-derived structural unit being derived from a straight chain aliphatic α,ω-dicarboxylic acid having 4 to 20 carbon atoms:

   Formula (1)

   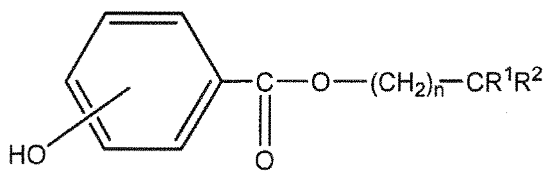

   wherein $R^1$ represents an alkyl group having 1 to 10 carbon atoms, $R^2$ represents an alkyl group having 2 to 12 carbon atoms, and n represents an integer of 1 to 3.

2. The polyamide resin fiber of Claim 1, wherein the polyamide resin fiber has a fineness of 50 to 800 dtex.

3. The polyamide resin fiber of Claim 2, wherein the polyamide resin fiber satisfies the following property;
   when the polyamide resin fiber is fixed and brought into contact with aluminum oxide-derived abrasive ceramic plates by rotating a friction disk at a rotational speed of 120 rpm so as to apply an average load of 150 g to the fiber, the polyamide resin fiber breaks when the number of rotation reached 100 or larger.

4. The polyamide resin fiber of any one of Claims 1 to 3, wherein the xylylenediamine comprises 30 to 100 mol% of metaxylylenediamine and 0 to 70 mol% of paraxylylenediamine.

5. The polyamide resin fiber of any one of Claims 1 to 4, wherein 50 mol% or more of the dicarboxylic acid-derived structural unit is derived from at least one of sebacic acid and adipic acid.

6. The polyamide resin fiber of any one of Claims 1 to 4, wherein 50 mol% or more of the dicarboxylic acid-derived structural unit is derived from adipic acid.

7. The polyamide resin fiber of any one of Claims 1 to 6, wherein the polyamide resin fiber has a phosphorus atom concentration of 0.1 to 10 ppm.

8. The polyamide resin fiber of any one of Claims 1 to 7, having a tensile strength, measured according to JIS L1013, of 2.0 cN/dtex or larger.

9. The polyamide resin fiber of any one of Claims 1 to 8, being drawn.

10. A method for manufacturing a polyamide resin fiber, the method comprising drawing a fiber composed of a polyamide resin composition,
the polyamide resin composition comprising 0.5 to 15 parts by weight of a compound represented by Formula (1), per 100 parts by weight of a polyamide resin,
the polyamide resin being composed of a diamine-derived structural unit and a dicarboxylic acid-derived structural unit,
50 mol% or more of the diamine-derived structural unit being derived from xylylenediamine, and 50 mol% or more of the dicarboxylic acid-derived structural unit being derived from a straight chain aliphatic $\alpha,\omega$-dicarboxylic acid having 4 to 20 carbon atoms:

Formula (1)

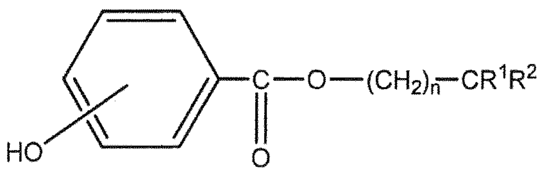

wherein $R^1$ represents an alkyl group having 1 to 10 carbon atoms, $R^2$ represents an alkyl group having 2 to 12 carbon atoms, and n represents an integer of 1 to 3.

11. The method for manufacturing a polyamide resin of Claim 10, wherein the drawing is performed in two or more stages.

12. The method for manufacturing a polyamide resin of Claim 10 or 11, performed at a total draw ratio of 4.1 or larger.

13. The method for manufacturing a polyamide resin of any one of Claims 10 to 12, wherein the fiber before being drawn has a fineness of 100 to 5000 dtex.

14. A polyamide resin composition comprising 0.5 to 15 parts by weight of a compound represented by Formula (1), per 100 parts by weight of a polyamide resin,
the polyamide resin being composed of a diamine-derived structural unit and a dicarboxylic acid-derived structural unit,
50 mol% or more of the diamine-derived structural unit being derived fromxylylenediamine, and 50 mol% or more of the dicarboxylic acid-derived structural unit being derived from a straight chain aliphatic $\alpha,\omega$-dicarboxylic acid having 4 to 20 carbon atoms:

Formula (1)

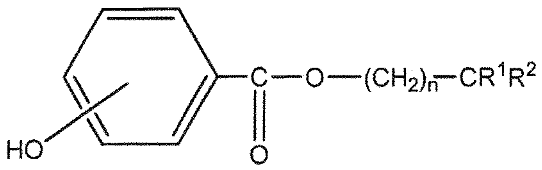

wherein $R^1$ represents an alkyl group having 1 to 10 carbon atoms, $R^2$ represents an alkyl group having 2 to 12 carbon atoms, and n represents an integer of 1 to 3.

**15.** The polyamide resin composition of Claim 14, having a phosphorus atom concentration of 0.1 to 10 ppm.

**16.** The polyamide resin composition of Claim 14 or 15, used for manufacturing a drawn polyamide resin fiber.

**17.** A woven fabric using the fiber described in any one of Claims 1 to 9.

**18.** A knitted fabric using the fiber described in any one of Claims 1 to 9.

**Patentansprüche**

**1.** Eine Polyamidharzfaser, umfassend 0,5 bis 15 Gewichtsteile einer durch Formel (1) dargestellten Verbindung, pro 100 Gewichtsteile eines Polyamidharzes,

wobei das Polyamidharz zusammengesetzt ist aus einer von einem Diamin abgeleiteten Struktureinheit und einer von einer Dicarbonsäure abgeleiteten Struktureinheit,
wobei 50 mol-% oder mehr der von einem Diamin abgeleiteten Struktureinheit von Xylylendiamin abgeleitet sind, und 50 mol-% oder mehr der von einer Dicarbonsäure abgeleiteten Struktureinheit von einer geradkettigen aliphatischen $\alpha,\omega$-Dicarbonsäure mit 4 bis 20 Kohlenstoffatomen abgeleitet sind:

Formel (1)

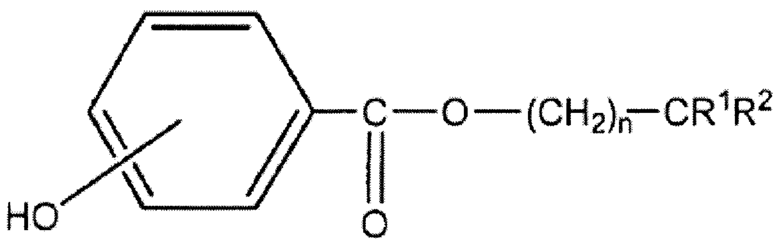

wobei $R^1$ eine Alkylgruppe mit 1 bis 10 Kohlenstoffatomen darstellt, $R^2$ eine Alkylgruppe mit 2 bis 12 Kohlenstoffatomen darstellt, und n eine ganze Zahl von 1 bis 3 darstellt.

**2.** Die Polyamidharzfaser gemäß Anspruch 1, wobei die Polyamidharzfaser eine Feinheit von 50 bis 800 dtex aufweist.

**3.** Die Polyamidharzfaser gemäß Anspruch 2, wobei die Polyamidharzfaser die folgende Eigenschaft erfüllt;
wenn die Polyamidharzfaser fixiert wird und in Kontakt gebracht wird mit keramischen Platten mit von Aluminiumoxid abgeleitetem Schleifmittel durch Rotieren einer Reibungsscheibe bei einer Rotationsgeschwindigkeit von 120 upm, um eine durchschnittliche Last von 150g auf die Faser anzuwenden, bricht die Polyamidharzfaser wenn die Umdrehungszahl 100 oder höher erreicht.

**4.** Die Polyamidharzfaser gemäß einem der Ansprüche 1 bis 3, wobei das Xylylendiamin 30 bis 100 mol-% meta-Xylylendiamin und 0 bis 70 mol-% para-Xylylendiamin umfasst.

5. Die Polyamidharzfaser gemäß einem der Ansprüche 1 bis 4, wobei 50 mol-% oder mehr der von der Dicarbonsäure abgeleiteten Struktureinheit von mindestens einer aus Sebacinsäure und Adipinsäure abgeleitet sind.

6. Die Polyamidharzfaser gemäß einem der Ansprüche 1 bis 4, wobei 50 mol-% oder mehr der von der Dicarbonsäure abgeleiteten Struktureinheit von Adipinsäure abgeleitet sind.

7. Die Polyamidharzfaser gemäß einem der Ansprüche 1 bis 6, wobei die Polyamidharzfaser eine Phosphoratomkonzentration von 0,1 bis 10 ppm aufweist.

8. Die Polyamidharzfaser gemäß einem der Ansprüche 1 bis 7, die eine Zugfestigkeit, gemessen gemäß JIS L1013, von 2,0 cN/dtex oder höher aufweist.

9. Die Polyamidharzfaser gemäß einem der Ansprüche 1 bis 8, welche verstreckt ist.

10. Ein Verfahren zur Herstellung einer Polyamidharzfaser, wobei das Verfahren das Strecken einer Faser zusammengesetzt aus einer Polyamidharzzusammensetzung, umfasst,

wobei die Polyamidharzzusammensetzung 0,5 bis 15 Gewichtsteile einer Verbindung dargestellt durch Formel (1), pro 100 Gewichtsteile eines Polyamidharzes umfasst,
wobei das Polyamidharz zusammengesetzt ist aus einer von einem Diamin abgeleiteten Struktureinheit und einer von einer Dicarbonsäure abgeleiteten Struktureinheit,
wobei 50 mol-% oder mehr der von dem Diamin abgeleiteten Struktureinheit von Xylylendiamin abgeleitet sind, und wobei 50 mol-% oder mehr der von der Dicarbonsäure abgeleiteten Struktureinheit von einer geradkettigen, aliphatischen $\alpha,\omega$-Dicarbonsäure mit 4 bis 20 Kohlenstoffatomen abgeleitet sind:

Formel (1)

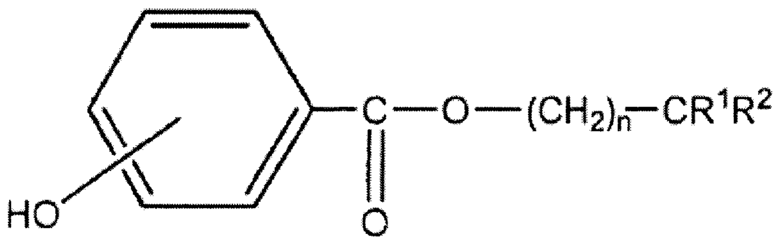

wobei $R^1$ eine Alkylgruppe mit 1 bis 10 Kohlenstoffatomen darstellt, $R^2$ eine Alkylgruppe mit 2 bis 12 Kohlenstoffatomen darstellt, und n eine ganze Zahl von 1 bis 3 darstellt.

11. Verfahren zur Herstellung einer Polyamidharzfaser gemäß Anspruch 10, wobei das Strecken in zwei oder mehr Stufen durchgeführt wird.

12. Das Verfahren zur Herstellung einer Polyamidharzfaser gemäß Anspruch 10 oder 11, das bei einem Gesamtstreckverhältnis von 4,1 oder größer durchgeführt wird.

13. Verfahren zur Herstellung einer Polyamidharzfaser gemäß einem der Ansprüche 10 bis 12, wobei die Faser vor dem Strecken eine Feinheit von 100 bis 5000 dtex aufweist.

14. Eine Polyamidharzzusammensetzung, umfassend 0,5 bis 15 Gewichtsteile einer Verbindung dargestellt durch Formel (1), pro 100 Gewichtsteile eines Polyamidharzes,

wobei das Polyamidharz zusammengesetzt ist aus einer von einem Diamin abgeleiteten Struktureinheit und einer von einer Dicarbonsäure abgeleiteten Struktureinheit,
wobei 50 mol% oder mehr der von einem Diamin abgeleiteten Struktureinheit von Xylylendiamin abgeleitet sind, und 50 mol-% oder mehr der von einer Dicarbonsäure abgeleiteten Struktureinheit von einer aliphatischen $\alpha,\omega$-Dicarbonsäure mit 4 bis 20 Kohlenstoffatomen abgeleitet sind:

Formel (1)

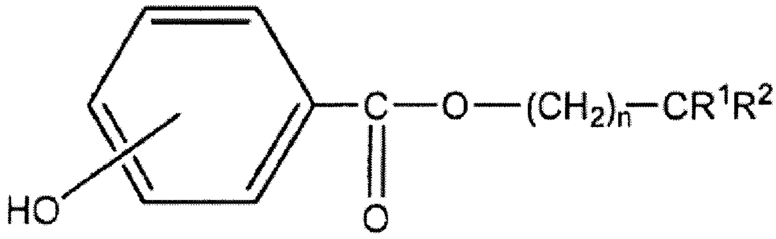

wobei $R^1$ eine Alkylgruppe mit 1 bis 10 Kohlenstoffatomen darstellt, $R^2$ eine Alkylgruppe mit 2 bis 12 Kohlenstoffatomen darstellt, und n eine ganze Zahl von 1 bis 3 darstellt.

**15.** Die Polyamidharzzusammensetzung gemäß Anspruch 14, die eine Phosphoratomkonzentration von 0,1 bis 10 ppm aufweist.

**16.** Die Polyamidharzzusammensetzung gemäß Anspruch 14 oder 15, verwendet zur Herstellung einer verstreckten Polyamidharzfaser.

**17.** Ein Gewebe unter Verwendung der Faser wie in einem der Ansprüche 1 bis 9 beschrieben.

**18.** Ein Gestrick unter Verwendung der Faser wie in einem der Ansprüche 1 bis 9 beschrieben.

**Revendications**

**1.** Fibre de résine de polyamide comprenant 0,5 à 15 parties en poids d'un composé représenté par la formule (1), pour 100 parties en poids de la résine de polyamide,
la résine de polyamide étant composée d'un motif structurel dérivé de diamine et d'un motif structurel dérivé d'acide dicarboxylique,
50 % en moles ou plus du motif structurel dérivé de diamine dérivant de xylylènediamine, et 50 % en moles ou plus du motif structurel dérivé d'acide dicarboxylique dérivant d'un acide $\alpha,\omega$-dicarboxylique aliphatique à chaîne droite ayant 4 à 20 atomes de carbone :

Formule (1)

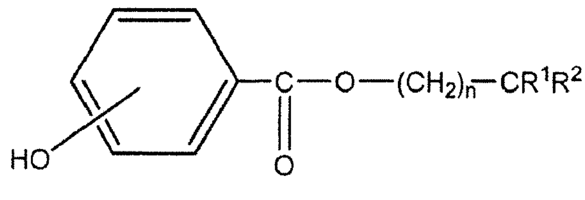

dans laquelle $R^1$ représente un groupe alkyle ayant 1 à 10 atomes de carbone, $R^2$ représente un groupe alkyle ayant 2 à 12 atomes de carbone, et n représente un entier de 1 à 3.

**2.** Fibre de résine de polyamide selon la revendication 1, laquelle fibre de résine de polyamide a une finesse de 50 à 800 dtex.

**3.** Fibre de résine de polyamide selon la revendication 2, laquelle fibre de résine de polyamide satisfait à la propriété suivante :
quand la fibre de résine de polyamide est fixée et portée au contact de plaques en céramique abrasives dérivées d'oxyde d'aluminium par rotation d'un disque de friction à une vitesse de rotation de 120 t/min de façon qu'une

charge moyenne de 150 g soit appliquée à la fibre, la fibre de résine de polyamide se rompt quand le nombre de tours atteint 100 ou plus.

**4.** Fibre de résine de polyamide selon l'une quelconque des revendications 1 à 3, dans laquelle le xylylènediamine comprend 30 à 100 % en moles de métaxylylènediamine et 0 à 70 % en moles de paraxylylènediamine.

**5.** Fibre de résine de polyamide selon l'une quelconque des revendications 1 à 4, dans laquelle 50 % en moles ou plus du motif structurel dérivé d'acide dicarboxylique dérivent d'au moins l'un parmi l'acide sébacique et l'acide adipique.

**6.** Fibre de résine de polyamide selon l'une quelconque des revendications 1 à 4, dans laquelle 50 % en moles ou plus du motif structurel dérivé d'acide dicarboxylique dérivent d'acide adipique.

**7.** Fibre de résine de polyamide selon l'une quelconque des revendications 1 à 6, laquelle fibre de résine de polyamide a une concentration d'atomes de phosphore de 0,1 à 10 ppm.

**8.** Fibre de résine de polyamide selon l'une quelconque des revendications 1 à 7, ayant une résistance à la traction, mesurée conformément à la norme JIS L1013, de 2,0 cN/dtex ou plus.

**9.** Fibre de résine de polyamide selon l'une quelconque des revendications 1 à 8, qui est étirée.

**10.** Méthode de fabrication d'une fibre de résine de polyamide, la méthode comprenant l'étirage d'une fibre composée d'une composition de résine de polyamide, la composition de résine de polyamide comprenant 0,5 à 15 parties en poids d'un composé représenté par la formule (1), pour 100 parties en poids d'une résine de polyamide,
la résine de polyamide étant composée d'un motif structurel dérivé de diamine et d'un motif structurel dérivé d'acide dicarboxylique,
50 % en moles ou plus du motif structurel dérivé de diamine dérivant de xylylènediamine, et 50 % en moles ou plus du motif structurel dérivé d'acide dicarboxylique dérivant d'un acide $\alpha,\omega$-dicarboxylique aliphatique à chaîne droite ayant 4 à 20 atomes de carbone :

Formule (1)

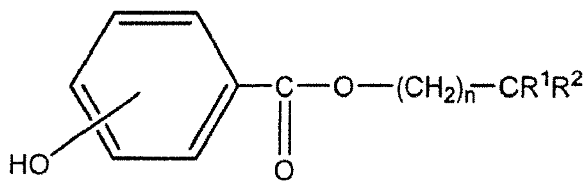

dans laquelle $R^1$ représente un groupe alkyle ayant 1 à 10 atomes de carbone, $R^2$ représente un groupe alkyle ayant 2 à 12 atomes de carbone, et n représente un entier de 1 à 3.

**11.** Méthode pour fabriquer une résine de polyamide selon la revendication 10, dans laquelle l'étirage est effectué en deux étapes ou plus.

**12.** Méthode pour fabriquer une résine de polyamide selon la revendication 10 ou 11, mise en œuvre avec un rapport d'étirage total de 4,1 ou plus.

**13.** Méthode pour fabriquer une résine de polyamide selon l'une quelconque des revendications 10 à 12, dans laquelle la fibre, avant d'être étirée, a une finesse de 100 à 5000 dtex.

**14.** Composition de résine de polyamide comprenant 0,5 à 15 parties en poids d'un composé représenté par la formule (1), pour 100 parties en poids d'une résine de polyamide,
la résine de polyamide étant composée d'un motif structurel dérivé de diamine et d'un motif structurel dérivé d'acide dicarboxylique,
50 % en moles ou plus du motif structurel dérivé de diamine dérivant de xylylènediamine, et 50 % en moles ou plus du motif structurel dérivé d'acide dicarboxylique dérivant d'un acide $\alpha,\omega$-dicarboxylique aliphatique à chaîne droite ayant 4 à 20 atomes de carbone :

Formule (1)

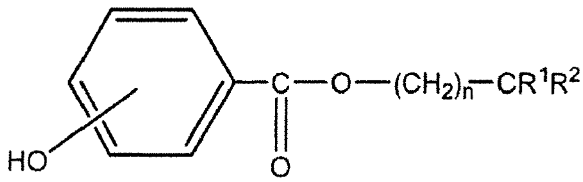

dans laquelle $R^1$ représente un groupe alkyle ayant 1 à 10 atomes de carbone, $R^2$ représente un groupe alkyle ayant 2 à 12 atomes de carbone, et n représente un entier de 1 à 3.

**15.** Composition de résine de polyamide selon la revendication 14, ayant une concentration d'atomes de phosphore de 0,1 à 10 ppm.

**16.** Composition de résine de polyamide selon la revendication 14 ou 15, utilisée pour la fabrication d'une fibre en résine de polyamide étirée.

**17.** Etoffe tissée utilisant la fibre décrite dans l'une quelconque des revendications 1 à 9.

**18.** Etoffe tricotée utilisant la fibre décrite dans l'une quelconque des revendications 1 à 9.

[Fig.1]

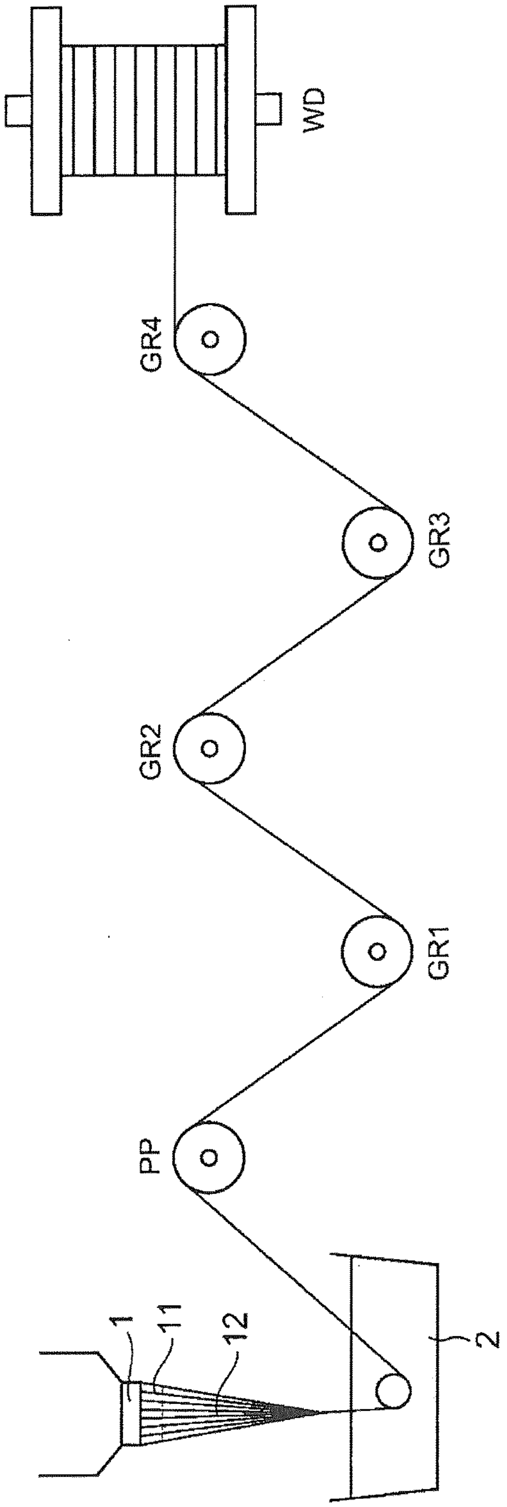

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H07157651 A
- WO 2011084421 A
- JP H0711131 A
- JP 2014173196 A
- JP 4894982 B


### Non-patent literature cited in the description


- *Sen-i Kogaku (Fiber Engineering),* 1973, vol. 26 (7
- *Sen-i Kogaku (Fiber Engineering),* 1973, vol. 26 (7), 564